# EUROPEAN PATENT SPECIFICATION

(11) **EP 0 411 700 B1**
(45) Date of publication and mention of the grant of the patent: **05.05.1993**
(21) Application number: 90202063.5
(22) Date of filing: 27.07.1990
(51) Int. Cl.: B65G 61/00, B65G 57/22

(54) **Machine for palletizing objects into a plurality of stacks**
Maschine zum Palettieren von Gegenständen auf mehrere Stapel
Machine à palettiser des objets dans plusieurs piles

(30) Priority: 04.08.1989 IT 4686589
(43) Date of publication of application: 06.02.1991
(73) Proprietor: Costi S.r.l., I-41040 Spezzano di Fiorano (Modena) (IT)
(72) Inventor: Costi, Silvano, I-41049 Sassuolo (Modena) (IT)
(74) Representative: Corradini, Corrado

(56) References cited:
- AT-B- 324 945
- DE-A- 2 658 288
- DE-A- 3 515 996

## Description

The present invention relates to the systems for palletizing objects where it is necessary to arrange the objects into a plurality of aligned stacks, generally (but not necessarily) placed on pallets.

To this end, known systems include mobile machines on tracks arranged parallel to the line defined by these stacks; the stacks can be positioned on one or both sides of the tracks, and the objects are fed to one or more points from which said objects are picked up to be arranged in stacks.

These systems are generally used during the product packaging stage, for cases in which objects which differ from each other and are mixed together arrive by means of the feed line, and must be arranged in different stacks of homogeneous objects.

The machines used in these systems are based on operations with movements occurring in directions parallel to three axes which are spatially perpendicular to each other (cartesian axes): a horizontal direction defined by the axis of the tracks, a horizontal direction perpendicular to the track axis and the vertical direction.

This arrangement allows a large number of different embodiments. Generally, the tracks lie on the ground and the machine has a central structure with vertical development from which an arm projects, extending transversally to the tracks, on one or both sides, and along said arm runs a trolley carrying the pick-up means.

Moreover, in many embodiments said transversal arm is at a constant height, and on said trolley there are telescopic means for moving the pick-up means vertically.

Moving along said cartesian axes, the machine picks up the objects individually from the feed point (or points) and arranges them in an ordered manner in the stacks. Said systems are generally equipped with an automatic control system which enables the machine to operate autonomously according to predetermined logic, in order to form stacks in which the objects are ordered and arranged according to preset order and spatial arrangement.

Said systems however have certain disadvantages.

One disadvantage is due to the fact that the transversal arm of the machine, as it travels in a direction perpendicular to its own longitudinal extension, considerably increases the overall machine dimensions; and furthermore this can constitute a danger to the machine operators in the vicinity of the stacks, a danger which is moreover increased by the fact that the machine runs along the tracks at speeds which are at times very high.

Another disadvantage arises from the fact that the objects are always arranged, in the stacks, in rows parallel to the said cartesian axes. When, therefore, an object is placed in a stack with the other objects, the final part of the movement must be in a direction which is inclined with respect to the said axes, such that the object is brought close to the others substantially by being moved along its own diagonal; if in fact this final movement occurred along one single cartesian axis, the object could collide with or graze the other objects in the stack. As a result, this final movement requires the simultaneous action of more than one moving part along two different axes, resulting in the operating logic of the automatic control system being more complex.

Furthermore, when the machine is moving, said transversal arm, as a result of the manner in which it is set, is subjected to horizontal dynamic bending thrusts which tend to produce undesirable stresses and vibrations in the structure.
In AT-B-324945, a machine according to the preamble of claim 1 is diclosed for palletizing objects into a plurality of stacks, able to pick up objects from one or more pick-up points and to transfer them in an ordered manner into stacks, which comprises track means parallel to the line defined by the stacks, a frame which runs along said track means, a column carried by said frame and an arm rotatable around a vertical axis substantially horizontal one end of which is pivoted to a trolley being able to slide along the column.
The latter mentioned machine prevents in part the above mentioned disadvantages; however, it is rather instable and its arm cannot be rotated for an angle more than 180°.
In DE-A1-2658288 a machine is disclosed for palletizing objects comprising a column carried by a frame such that its arm can be rotated by an angle of 90°. During the use of the machine the arm can be shifted by means of a two-bar linkage. One aim of the present invention is that of preventing all the above-mentioned disadvantages.
This aim is achieved by a machine having the features of the preamble of claim 1 with the characterising features of claim 1.
The present invention reduces both the machine dimensions and the risk of injury to persons, as the machine is able to travel along its own tracks with its arm parallel to and over these same tracks, and the arm itself can be turned only when it is substantially over the stacks where the object is to be deposited.
Furthermore, precisely for this reason, during said travels the arm is not subjected to dynamic bending thrusts; this fact allows the machine to have a less heavy structure and to be subjected to less stresses and fewer vibrations.
More generally, the invention simplifies and streamlines the structure of the machine.
Moreover the arm which picks up the object can rotate around the vertical axis of the column for one or more round angles so rendering easier and quicker the operations.

Moreover, the operating logic of the automatic control system is simplified, as the final length of the transfer to place the object in the stack can occur with a single movement, or with a single rotation of the arm; this movement in fact brings the object close to the other objects in the stack in a diagonal direction.

Further features and advantages of the present invention are shown in the detailed description which follows of a preferred, although not the only, embodiment illustrated in the accompanying figures.

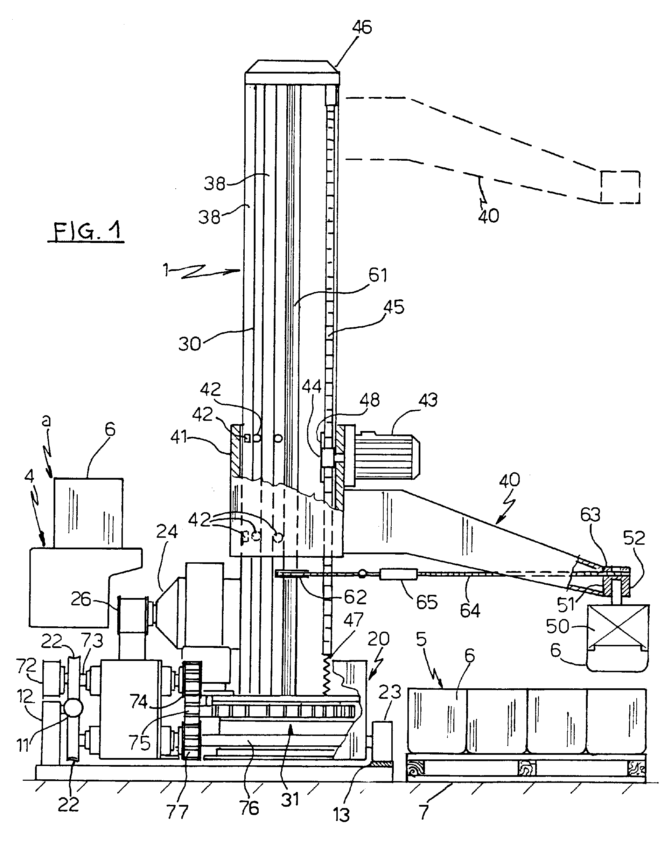

FIG. 1 is a side view of the machine, partially in section, taken parallel to the tracks.

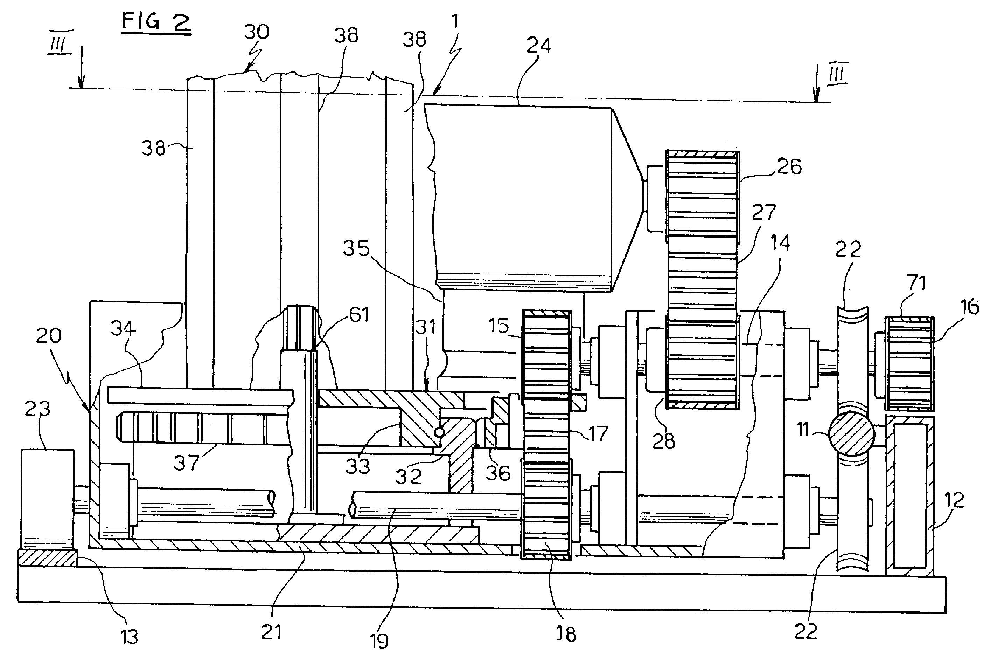

FIG. 2 is a view of the lower part of the machine, partially in section and enlarged, seen from the opposite side to that in FIG. 1.

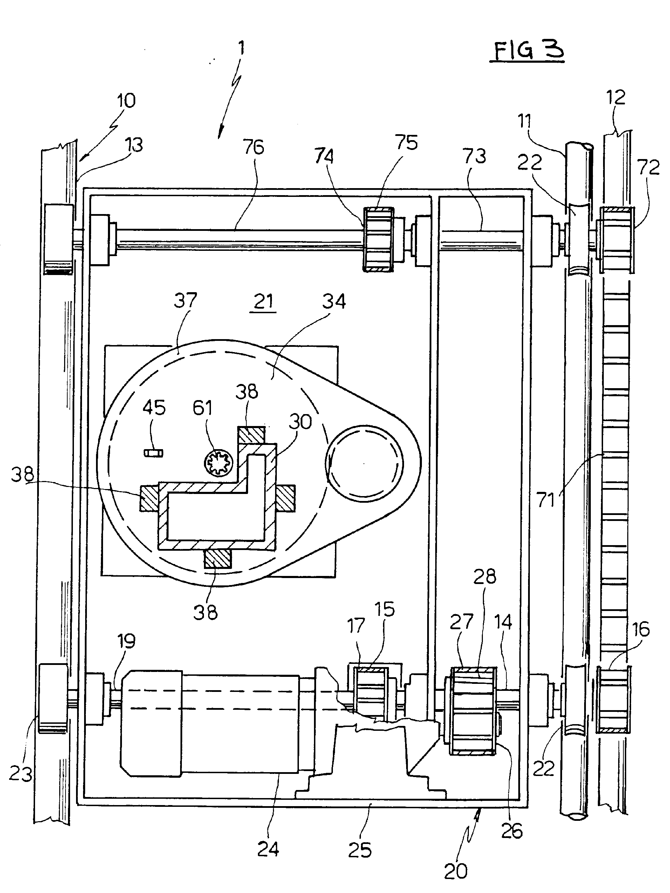

FIG. 3 is a section taken along the plane III-III in FIG. 2.
FIG. 4 is a schematic plan view of a system comprising the machine in question.

With reference to the above-mentioned figures, the following numerals are used: 1 indicates the overall machine in question; 5 indicates some stacks, in formation, still to be formed, or already formed, arranged aligned with each other along a line; 6 indicates the objects to be placed in an ordered manner in the stacks 5, and 4 indicates a conveyor which feeds the objects to one or more pick-up points.

The machine 1 comprises track means 10 parallel to the line defined by the aligned stacks. Along these means 10 runs a frame 20 equipped with means for mechanically moving the frame along these tracks 10.

There is also a column 30, carried by the frame 20, and an arm 40 which is substantially horizontal, secured by one of its ends to the column 30 and able to rotate around a vertical axis located close to the said end. At the other end of the arm 40, which is free, are located the means 50 for taking and releasing the objects 6. The column 30 is secured to the frame 20 such that it is able to rotate, with respect to the frame, around a vertical axis.

In particular, there is a thrust bearing 31, with a vertical axis, of which the lower annular element 32 is securely fixed to a horizontal plate 21 of the frame 20, and of which the upper annular element 33 is fixed to a base plate 34 of the column 30; the two elements 32 and 33 are mutually connected but capable of moving independently of each other as the normal thrust blocks; the rotational axis of the thrust bearing is also the rotational axis of the column 30.

The machine is also equipped with means for turning the column according to the angles required. In particular, said means comprise a motor 35 with a vertical axis, fixed over the plate 34 and carrying a pinion 36 which engages the toothing 37 in a circular arrangement located on the external perimeter of the element 32; the action of the motor 35 causes the pinion 36 to roll along the toothing 37, which is fixed, and consequently the rotation of the plate 34 around the vertical axis of the thrust bearing 31.

Furthermore, there is a trolley 41 connected prismatically to the column 30 such that it can only run vertically along it; and one end of the arm 40 is fixed securely to said trolley 41.

In particular the column 30 is of a prismatic shape, with four faces arranged in the form of a square, to each of which is fixed a respective straight vertical guide 38. The trolley 41 is of a prismatic tubular shape and encompasses the column 30, and is fitted with four sets of wheels 42 two by two facing and engaged with the guides 38 on the two opposing sides of each of these guides.

To the trolley 41 are fixed means for moving the actual trolley vertically along the column for the required lengths.

In particular, these means comprise an electric motor 43 which is fixed to the trolley 41 with its own horizontal shaft; this shaft has a pinion 44 which engages a vertical articulated chain 45 which is hung on a plate 46 fixed at the top of the column 30; the lower end of the chain 45 is connected, by means of an elastic spring 47 or by means of other equivalent means, to the base plate 34. Pivoted to the trolley 41 there are two other pinions 48, which are idle, located close to the pinion 44 and both connected to the chain 45; these pinions 48 serve to ensure that the chain 45 winds through an arc of 180° around the pinion 44. The revolving of the motor 43 causes the pinion to turn, engaging, along the fixed track defined by the chain 45, thereby causing the trolley 41, and therefore the arm 40, to run either upwards or downwards.

A grooved shaft 61 with longitudinal grooves is securely fixed to the plate 21, and the shaft axis corresponds with the rotational axis of the thrust bearing 31; to the shaft 61 is connected prismatically a toothed wheel 62 which can run freely in a vertical direction along the actual shaft, but which is not able to rotate; this wheel 62 is secured to the trolley 41 in such a way that it moves vertically with it. The shaft 61 is located close to the column 30, in a longitudinal housing provided for this purpose on the column.

The pick-up means 50 are secured to the free end of the arm 40 in such a way that they can rotate around a vertical axis passing through this end; for this purpose a vertical pin 51 is provided, supporting the means 50, which is able to turn within a bushing 52 on the end of the arm 40. The pin 51 is fitted with a toothed wheel 63, which is the same as the wheel 62 and located on the same horizontal plane; an articulated chain 64 winds in a closed ring around the two wheels 62 and 63. When the column 30 rotates, and consequently the arm 40 rotates with it, as the shaft 61 remains still and with it the wheel 62, the wheel 63 receives, via the chain 64, a rotation equal and opposite to that of the arm 40; the means 50 are thereby kept in the same direction even when the arm 40 is turning.

Two fluid-operated jacks 65 operating as lengths of the chain itself are located along the two sections of the chain 64. Leaving the two jacks 65 locked, the chain 64 operates as described above. If on the other hand it is necessary to adjust the direction of the means 50, one of the two jacks 65 is extended while at the same time the other is retracted by the same amount; this causes the wheel 63, and consequently the means 50, to rotate.

The track means 10 have a guide 11, which is horizontal and suspended over the ground, held up by the support edge 12.

The sliding frame 20 has four wheels 22, located on one side, which engage said guide 11, above and below it; the section of the guide 11 is circular and the profile of the wheels 22, in section, corresponds to the profile of the guide 11. The frame 20 is thereby secured to the guide 11 in all directions perpendicular to the frame axis and can therefore only run along the guide 11.

A second guide 13 is located along the other side of the frame 20 and rests on the ground; two wheels 23 fitted on the said side of the frame 20 roll along the guide simply as supports.

In order to move the frame 20 along the guides 11 and 13, there is a motor 24, fixed to a vertical plate 25 of the frame 20 with its own horizontal shaft. The shaft of the motor24 is fitted with a pulley 26 which, via a belt 27, rotates a pulley 28 fitted to a shaft 14, supported by the frame 20, onto which an upper wheel 22 and two pulleys 15 and 16 are also fitted.

The pulley 15, via a belt 17, rotates a pulley 18 fitted onto a shaft 19, supported by the frame 20, onto which a wheel 23 and a lower wheel 22 are also fitted. The pulley 16, via a belt 71, rotates a pulley 72 fitted onto a shaft 73, supported by the frame 20, onto which an upper wheel 22 and a pulley 74 are also fitted. The pulley 74, via a belt 75, rotates another pulley 77 fitted onto a shaft 76, supported by the frame 20, onto which a wheel 23 and a lower wheel 22 are also fitted. This drive system described above causes the motor 24 to rotate all the wheels 22 and 23 of the frame 20 simultaneously.

The means described allow the machine in question 1 to travel along the tracks 10 and rotate, even through 360°, around the vertical axis of the thrust bearing 31.

Combining these two movements, the pick-up means 50 are able to reach any point of the plan area which is included in the ideal field of action defined by the two parallel lines, which are ideally traced by the free end of the arm 40 when the machine runs along the tracks 10 with the arm 40 perpendicular to the actual tracks and directed from one side to the other with respect to the actual tracks.

Furthermore, when the trolley 41 is raised, the pick-up means 50 are able to reach any level (obviously not exceeding the height of the column 30 and the height of the trolley 41) within said ideal field of action.

The pallets 7, on which the stacks 5 are to be formed, are located sufficiently close to the tracks 10 to fall within the ideal field of action; the machine picks up one object 6 at a time from the pick-up point a, located for example at the end downstream of the conveyor 4, and subsequently places it in the stack relevant to said object. The machine control system is programmed to automate said pallettizing operations.

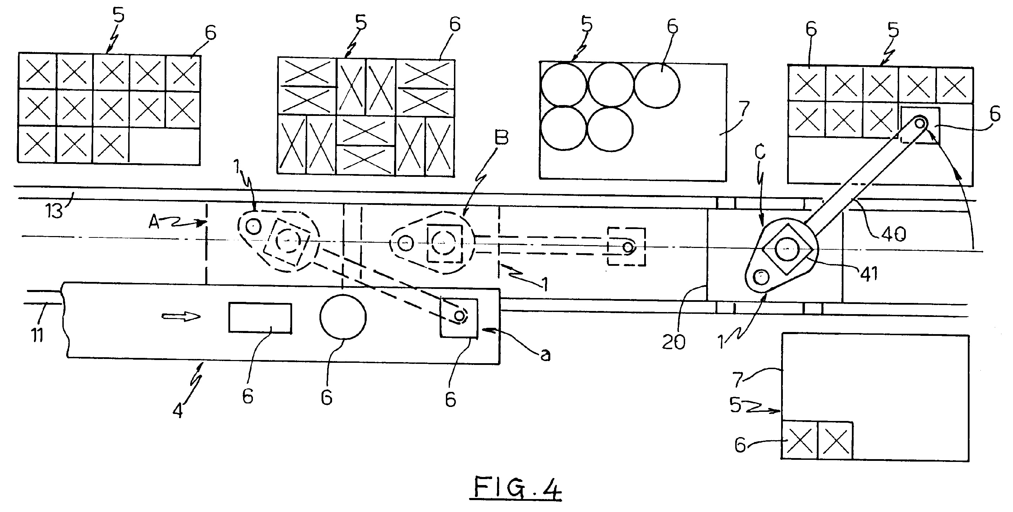

As stated above, the machine is able to reach all the points of the ideal field of action. A preferred method of operation is shown with the help of FIG. 4. The machine moves to a predetermined, constant point, close to point a; from this point, rotating the arm 40 in a clockwise direction, takes it over the object 6 located at point a ready to pick it up (position indicated by A). The arm 40 is then rotated in an anti-clockwise direction and taken parallel to the tracks 10. The machine then travels (position B) (to the right or left, according to the position of the stack) and is disposes itself close to the stack 5 to which the object is destined. The machine then stops, and the arm rotates to carry the object 6 to the required point in the stack (position C) and descends onto it at the height required to release the object. The means 50 may, if necessary, be rotated around the axis of the pin 51 to adjust as required the orientation of the object. The logic of the movements may be set in various ways. In particular, the logic may be set in such a way that the last length of rotating and of lowering of the arm 40 onto the stack is performed at low speed in order that the object is positioned precisely on the stack.

This operation ensures that when the machine moves along the tracks 10, the arm 40 is aligned with the tracks, thereby reducing both the overall dimensions of the system and particularly the danger of injury to persons.

Moreover, during the travel, the arm 40 is not subjected to dynamic bending thrusts. The operating logic is also simplified as the last arc of the rotation of the arm 40 onto the stack causes the majority of the objects to come close to the other objects which are already present in the stack, in a diagonal direction or in the optimum direction for positioning the object. Alternatively, the arm 40 can be securely fixed to the column 30, for example at the maximum height and telescopic elements can be disposed at the free end of the arm 40 to proceed to the vertical movement of the pick-up means 50.

Moreover, the column 30 can be fixed to the frame 20 and the arm 40 can be secured to the column 30 by means of a hinge with a vertical axis which allows the arm 40 to rotate around the column 30.

The stacks 5 can be arranged on either side of the tracks 10 and furthermore can be located at unequal distances from the actual tracks 30.

There can be many and different points at which the objects on the conveyor 4 are picked up.

The conveyor 4 can be arranged and directed in a different manner to that shown in FIG. 4.

The means 50 can be of any known kind, i.e. with side pressure, with lower support, with suckers etc.

## Claims

1. Machine for palletizing objects into a plurality of stacks, of the type comprising in combination:
track means (10) parallel to the line defined by the stacks (5);
a frame (20) which runs along said track menas (10);
means for mechanically transferring said frame (20) along the track means (10);
a column (30) carried by said frame (20);
an arm (40) rotatable around a vertical axis which is substantially horizontal, having a constant length, one end of which is connected to a trolley (41) connected prismatically to the column (30) and being able to slide along the column (30);
pick-up means (50) carried by the second end of said arm(40) for picking up the objects;
means for moving the trolley (41) along the column (30) for the distances required
characterized by the fact that:
- said column (30) is secured to the frame (20) in order to be able to rotate with respect to the frame around a vertical axis through 360°;
- the first end of said arm (40) is firmly secured to the trolley (41);
- the means for rotating said column (30) for the required angles are located within said frame (20) close to the lower end of the columns (30).

2. Machine according to the claim 1 characterized by the fact that the means for rotating the said column (30) consist of a toothing (37) fixed to the frame (20), which meshes with a pinion (36) carried by a motor (35) fixed to the base of the column (30).

## Patentansprüche

1. Maschine zum Palettieren von Gegenständen in mehreren Stapeln vom Typ in Kombination bestehend aus:
Gleitmittel (10) parallel zu der von den Stapeln (5) definierten Linie.
ein Rahmen (20), der längs besagter Gleitmittel (10) läuft: Mittel, um den besagten Rahmen (20) mechanisch längs dieser Gleitmittel (10) zu bewegen:
eine von besagtem Rahmen (20) gestützte Säule (30);
ein um eine Längsachse drehbarer Arm (40) von gleichbleibender Länge, wobei ein Ende hiervon mit einem Schlitten (41) verbunden ist, der prismatisch mit der Säule (30) verbunden ist und längs der Säule (30) gleiten kann;
vom anderen Ende des besagten Armes (40) gestützte Sammelmittel (50) zur Einsammlung der Gegenstände;
Mittel zur Verschiebung des Schlittens (41) längs der Säule (30) entsprechend den geforderten Abständen
charakterisiert durch die Tatsache, daß;
- besagte Säule (30) so an den Rahmen (20) befestigt ist, daß sie sich gegenüber dem Rahmen 360° um eine Längsachse drehen kann;
- das erste Ende des besagten Armes (40) fest an den Schlitten (41) befestigt ist;
- sich die Mittel zur Drehung besagter Säule (30) entsprechend den gewünschten Abwinklungen in Innern besagten Rahmens (20) nahe dem unteren Säulenende (30) befinden.

2. Maschine entsprechend Anspruch 1 charackterisiert durch die Tatsache, daß die Mittel zur Drehung besagter Säule (30) in einer an den Rahmen (30) befestigten Verzahnung (37) bestehen, die mit einem Ritzel (36) eingreift, das von einem an der Säulenbasis (30) befestigten Motor (35) gestützt wird.

## Revendications

1. Machine pour palettiser des objets en plusieurs piles, du type comprenant la combinaison de:
dispositifs de glissement (10) parallèles à la ligne définie par les piles (5),
un châssis (20) qui coulisse le long de ces dispositifs de glissement (10); des dispositifs pour transférer ce châssis (20) mécaniquement le long de ces dispositifs de glissement (10);
une colonne (30) portée par ce châssis (20);
un bras (40) pivotant autour d'un axe vertical, d'une longueur constante, à une extrémité duquel est relié un chariot (41) assemblé à la colonne (30) en formant un prisme et en mesure de coulisser le long de la colonne (30);
des dispositifs de regroupement (50) fixés à l'autre extrémité de ce bras (40) pour rassembler les objets;
des dispositifs pour déplacer le chariot (41) le long de la colonne (30) en fonction des distances requises
caractérisée par le fait que:
- cette colonne (30) est fixée au châssis (20) de façon à pouvoir pivoter de 360° par rapport au châssis, autour d'un axe vertical;
- la première extrémité de ce bras (40) est solidement fixée au chariot (41);
- les dispositifs permettant à la colonne (30) de pivoter suivant les angles requis sont placés à l'intérieur de ce châssis (20) près de l'extrémité inférieure de la colonne (30).

2. Machine conforme à la revendication 1, caractérisée par le fait que les dispositifs servant à faire pivoter la colonne (30) se composent d'une denture (37) fixée au châssis (30) et s'engageant dans un pignon (36) supporté par un moteur (35) fixé à la base de la colonne (30).
